# EUROPÄISCHE PATENTANMELDUNG

(11) **EP 0 686 353 A1**
(43) Veröffentlichungstag der Anmeldung: **13.12.1995**
(21) Anmeldenummer: 94108956.7
(22) Anmeldetag: 10.06.1994
(51) Int. Cl.: A23N 1/02, C11B 1/00

(54) **Anlage und Verfahren zur Herstellung von pflanzlichem Öl aus Oliven oder dgl. ölhaltigen Früchten**

(71) Anmelder: Flottweg GmbH, D-84137 Vilsbiburg (DE)
(72) Erfinder: Colesan, Fritz, Dipl.-Ing., D-84034 Landshut (DE); Langenbrinck, Hans, Dipl.-Ing., D-84137 Vilsbiburg (DE)
(74) Vertreter: Flügel, Otto, Dipl.-Ing.

(57) **Zusammenfassung**

Die Erfindung betrifft eine Anlage und ein Verfahren zur Herstellung von pflanzlichem Öl aus Oliven oder dgl. ölhaltigen Früchten mit einer Reinigungseinrichtung (2), einer der Reinigungseinrichtung (2) nachgeschalteter Zerkleinerungseinrichtung (3), einer Mischeinrichtung (4), die der Zerkleinerungseinrichtung (3) nachgeordnet ist, sowie zumindest einer Einrichtung zum Entölen und/oder Entwässern einer der Mischenrichtung (4) entnommenen Masche (5) bzw. eines Tresters. Eine Anlage und ein Verfahren zur Gewinnung von Olivenöl oder dgl. pflanzlichem Öl, bei der die zugesetzte Frischwassermenge reduziert und das anfallende Fruchtwasser soweit wie möglich im Feststoff erhalten bleibt, wird dadurch geschaffen, daß die Einrichtung zum Entölen der der Mischeinrichtung (4) entnommenen Maische (5) als kontinuierlich arbeitende Bandpresse, vorzugsweise als Siebbandpresse (25) ausgebildet ist.

## Beschreibung

Die Erfindung betrifft eine Anlage zur Herstellung von pflanzlichem Öl aus Oliven oder dgl. ölhaltigen Früchten mit einer Reinigungseinrichtung, einer der Reinigungseinrichtung nachgeschalteten Zerkleinerungseinrichtung, vorzugsweise einer Mühle, einer Mischeinrichtung, die der Zerkleinerungseinrichtung nachgeordnet ist sowie zumindest einer Einrichtung zum Entölen und/oder Entwässern einer der Mischeinrichtung entnommenen Maische bzw. eines Tresters. Darüberhinaus betrifft die Erfindung ein Verfahren zur Herstellung von pflanzlichem Öl aus Oliven oder dgl. ölhaltigen Früchten, bei dem die Oliven oder dgl. einer Reinigung und/oder Entblätterung zugeführt und anschließend in einer Zerkleinerungseinrichtung, vorzugsweise einer Mühle zur Bereitung einer Maische oder eines Tresters zugeführt werden, woraufhin die Maische oder der Trester in einer Mischeinrichtung, vorzugsweise einem temperierten Mischer aufgeschlossen wird.

Aus dem Stand der Technik sind sowohl Anlagen als auch Verfahren zur Herstellung von pflanzlichem Öl aus Oliven oder dgl. ölhaltigen Früchten bekannt. Bei diesen Anlagen und Verfahren werden sogenannte Dekantierzentrifugen als Einrichtung zum Entölen der der Mischeinrichtung entnommenen Maische verwendet, die das Öl der Olivenmaische mit Hilfe von Zusatzwasser abtrennen, insbesondere in einer sogenannten Dreiphasen-Trennung, bei der die Olivenmaische in Olivenöl, mit einem geringen Anteil an Wasser, Fruchtwasser mit Zusatzwasser sowie Feststoff aufgeschlossen wird. Bei diesen vorbekannten, sogenannten Dekantierverfahren mittels dieser Dekantierzentrifugen wird dem Fruchtbrei vor der Dekantierzentrifuge ca. 40 % Anteile Wasser, bezogen auf die Masse des Fruchtbreis zugesetzt. Aus der Dekantierzentrifuge wird Trüböl abgezogen, welches anschließend zur Reinigung und Minimierung von vorhandenen Trübstoffen und Wasser einer Tellerzentrifuge zugeführt wird, in der wiederum Wasser zugegeben wird. Die in die Tellerzentrifuge zugegebene Wassermenge entspricht im Mittel zwischen fünf und zehn Prozent der zulaufenden Trübölmenge und dient zur Waschung und Polierung des Trüböls in diesem Verfahrensschritt. Der in der Dreiphasen-Dekantierzentrifuge anfallende Feststoff enthält im Mittel ca. 50 % Wasser, welches für eine nachfolgende Extraktion mit technischem Hexan getrocknet werden muß.

Das weiterhin aus der Dreiphasen-Dekantierzentrifuge abzuziehende verdünnte Fruchtwasser wird mittels einer zweiten Tellerzentrifuge ebenfalls entölt. Dieses aus der zweiten Tellerzentrifuge gewonnene Öl wird mit dem aus Dekantierzentrifuge gewonnenen Trüböl vermischt.

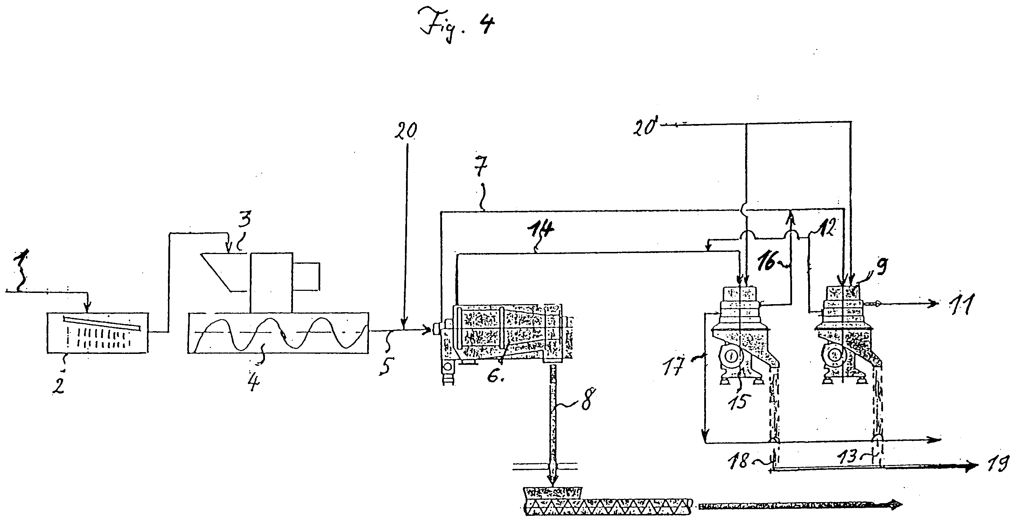

Eine vorbekannte Anlage zur Herstellung von pflanzlichem Öl aus Oliven ist in der Figur 4 dargestellt. Bei dieser Anlage handelt es sich um eine solche, mit der ein Dreiphasenverfahren unter Verwendung einer Dekantierzentrifuge ausgeführt wird. Bei diesem vorbekannten Dreiphasenverfahren werden Oliven 1 einer Entblätterungs- und Waschanlage 2 zugeführt, in der die Oliven gereinigt werden. Anschließend werden die gereinigten Oliven 1 der Entblätterungs- und Waschanlage 2 entnommen und einer Mühle 3 zugeführt, in der die Oliven 1 zu einer Olivenmaische 5 zermahlen werden. Diese Olivenmaische 5 wird in einem temperierten Mischer 4 aufgeschlossen, der unterhalb der Mühle 3 angeordnet ist. Nach einer vorbestimmten Reaktionszeit wird die Olivenmaische 5 mit ca. 40 % Wasser 20 bezogen auf ihre Masse versetzt und einer Dreiphasen-Dekantierzentrifuge 6 zugeführt. In dieser Dreiphasen-Dekantierzentrifuge 6 wird die Olivenmaische 5 in Trüböl 7, Feststoffe 8 und Wasser 14 getrennt. Die Feststoffe 8 stellen hierbei einen Gewichtsanteil von 50 bis 60 %, bezogen auf die zugeführte Olivenmaische 5 dar.

Das der Dreiphasen-Dekantierzentrifuge 6 entnommene Trüböl 7 wird anschließend einer Tellerzentrifuge 9 zugeleitet, in der das in dem Trüböl noch enthaltene Wasser und Feststoffteilchen abgeschieden werden. Gleichzeitig mit dem Trüböl 7 wird der Tellerzentrifuge 9 zum Waschen und Reinigen des zu gewinnenden Olivenöls ca. 5 bis 10 % Wasser 20', bezogen auf die zugeführte Menge Trüböl 7 zugesetzt.

Aus der Tellerzentrifuge 9 wird über eine Leitung 11 das herzustellende Olivenöl abgezogen. Das in der Tellerzentrifuge 9 abgetrennte Wasser 12 wird dem der Dreiphasen-Dekantierzentrifuge 6 entnommenen Wasser 14 zugeführt und gemeinsam mit diesem einer Tellerzentrifuge 15 eingespeist, in der Resttrüböl 16, Wasser 17 und Schlamm 18 aufgetrennt werden. Das Wasser 17 und der Schlamm 18 ergeben zusammen mit einem der ersten Tellerzentrifuge 9 entnommenen Schlamm 13 ein Abwasser 19, dessen Gewichtsanteil ca. 80 % - bezogen auf die verarbeitete Olivenmenge - beträgt.

Es ist bei derartigen Verfahren üblich, sowohl das Abwasser 19 als auch andere der Anlage entnommene Wassermengen im sogenannten vorbereitete Lagunen einzuleiten, wo es auf natürliche Weise verdunstet oder in das Erdreich versickert. Durch die in Verbindung mit dem versickern entstehende Fäulnis entsteht - neben einer üblen Geruchsbelästigung - eine Verschmutzung des Grundwassers. Beispielsweise fallen bei Verarbeitungskapazitäten von 3000 bis 10000 kg Oliven pro Stunde im Mittel pro 24-Stunden-Tag 80000 bis 260000 Liter hochbelastetes Abwasser an, das sich zusammensetzt aus Fruchtwasser und Frischwasser. Die BSB-Werte (biologischer Sauerstoffbedarf) bewegen sich hierbei zwischen 70000 und 100000 mgO₂ pro Liter Wasser. Demzufolge stellt das voranstehend beschriebene, vorbekannte Verfahren zur Herstellung von pflanzlichem Öl aus Oliven eine stark umweltbelastende Vorgehensweise dar.

Ausgehend von diesem Stand der Technik liegt der Erfindung die **Aufgabe** zugrunde, eine Anlage und ein Verfahren zur Herstellung von pflanzlichem Öl aus Oliven oder dgl. ölhaltigen Früchten zu schaffen, bei der die zuzusetzende Frischwassermenge wesentlich reduziert bzw. vermieden wird und das anfallende Fruchtwasser soweit wie möglich im Feststoff erhalten bleibt.

Die **Lösung** dieser Aufgabenstellung sieht bei einer gattungsgemäßen Anlage vor, daß die Einrichtung zum Entölen der der Mischeinrichtung entnommenen Maische als Bandpresse, vorzugsweise als Siebbandpresse ausgebildet ist. Ferner ist als **Lösung** der Aufgabenstellung bei einem gattungsgemäßen Verfahren vorgesehen, daß die bzw. der aus der Mischeinrichtung abgezogene Maische bzw. Trester einer Bandpresse, vorzugsweise einer Siebbandpresse zur Entölung bzw. Entwässerung zugeführt wird und daß aus der Bandpresse ein Öl-Wasser-Gemisch und Feststoff abgezogen wird, wobei das Öl-Wasser-Gemisch mittels einer Zentrifuge, vorzugsweise einer Tellerzentrifuge in seine Bestandteile getrennt wird.

Vorteil der erfindungsgemäßen Anlage sowie des erfindungsgemäßen Verfahrens ist, daß bei der Verarbeitung von frischer Olivenmaische auf die Zugabe von Frischwasser verzichtet werden kann. Lediglich für die Verarbeitung von fruchtwasserarmen Oliven, bspw. von eingetrockneten Oliven ist eine geringe Wasserzugabe empfehlenswert, um eine höhere technische Ölausbeute zu erzielen. Die in Thermomischern aufgeschlossene Olivenmaische wird mittels einer Monopumpe der kontinuierlich laufenden Bandpresse zugeführt, die der Olivenmaische ein Öl-Fruchtwasser-Gemisch entzieht, wobei der anfallende Feststoff nur noch einen sehr geringen Eigenwasseranteil enthält und daher für eine weitere Extraktion besonders geeignet ist. Das gleichzeitige Entziehen von Öl- und Fruchtwasser aus der Olivenmaische hat bei dem erfindungsgemäßen Verfahren den Vorteil, daß der Frischwasserverbrauch, der zum Klären des Rohöls bei einer Tellerzentrifuge benötigt wird, auf ein zehntel der sonst benötigten Menge reduziert wird, wie sie bspw. bei dem voranstehend beschriebenen, vorbekannten Verfahren notwendig ist. Die Qualität des abgeschiedenen Frucht- und Trennwassers ist so gut, daß das Wasser in den Wasserkreislauf der Olivenwäsche zurückgeführt oder aber als Ergänzung bei eingetrockneten Oliven, die nur sehr wenig Fruchtwasser verfügen, verwendet werden kann.

Da bei dem erfindungsgemäßen Verfahren die Herstellung der Olivenmaische ohne Zugabe von großen Frischwassermengen abläuft, entfällt auch ein die Umwelt belastendes Abwasser, welches den weiteren Verfahrensverlauf belasten würde und nach Beendigung des gesamten Verfahrens entsorgt bzw. gereinigt werden müßte.

Ein weiterer Vorteil des erfindungsgemäßen Verfahrens bzw. der erfindungsgemäßen Anlage ist darin zu sehen, daß neben der Minimierung des Abwasserproblems gleichzeitig eine Verbesserung der Ölqualität erzielt wird, d.h., daß durch den Verzicht auf große Mengen Wasser die in den Oliven enthaltene Polyphenole (Aroma/Konservierungsstoffe) erhalten und damit die Lagerfähigkeit des produzierten Olivenöls verlängert werden. Schließlich ist es bei dem erfindungsgemäßen Verfahren bzw. bei der erfindungsgemäßen Anlage vorteilhaft, daß mit der gegenüber dem Stand der Technik wesentlich vereinfachten Anlage ein wesentlich preisgünstigeres Herstellungsverfahren durchgeführt werden kann.

Zu der qualitativen Verbesserung des Öls kommt noch hinzu, daß die technische Ausbeute bei diesem Verfahren wesentlich höher ist, als bei dem voranstehend beschriebenen Dreiphasen-Trennprozeß, da beim zentrifugalen Trennen der Olivenmaische die Viskosität der in die Zentrifuge eingegebenen Maische eine entscheidende Rolle für das erzielbare Trennergebnis spielt, wohingegen bei der kontinuierlich laufenden Bandpresse lediglich Scherkräfte und Druckbelastungen auftreten. Von weiterer entscheidender Bedeutung für das erfindungsgemäße Verfahren ist, daß durch die voranstehend genannten Vorteile der Vorteil einer erheblichen Reduzierung des Energiebedarfs erzielt wird.

Es ist nach einem weiteren Merkmal der erfindungsgemäßen Anlage vorgesehen, daß der Bandpresse zum Teilentölen und/oder Teilentwässern eine Dekantierzentrifuge zum Entölen und/oder Entwässern der Maische vorgeschaltet ist. Eine derartige Anordnung von Bandpresse und Dekantierzentrifuge hat insbesondere den Vorteil, daß eine weitere Verbesserung der Entölung bzw. Entwässerung der Maische erzielt wird. Darüberhinaus ist es nach einer Weiterbildung vorgesehen, daß die Dekantierzentrifuge derart oberhalb der Bandpresse angeordnet ist, daß sich der Ausgang der Dekantierzentrifuge oberhalb der Aufgabe der Bandpresse befindet. Diese Ausgestaltung hat insbesondere den Vorteil, daß eine kompakte Einheit erzielt wird, die räumlich nur geringe Einbaumaße aufweist.

Nach einer alternativen Ausbildungsform der erfindungsgemäßen Anlage ist vorgesehen, daß der Bandpresse eine Dekantierzentrifuge zum Nachentölen der Maische nachgeschaltet ist. In dieser Dekantierzentrifuge, welche bspw. als Vollmantelschneckenzentrifuge ausgebildet sein kann, was im übrigen auch für die voranstehend erwähnten Dekantierzentrifugen zutrifft, wird das der Bandpresse entnommene Medium in Restöl und Feststoff vermischt mit Fruchtwasser getrennt.

Schließlich ist bei einer erfindungsgemäßen Anlage, wie voranstehend erwähnt, vorgesehen, daß der Dekantierzentrifuge eine Tellerzentrifuge nachgeschaltet ist, die der Reinigung des aus der Dekantierzentrifuge abgezogenen Restöls dient, um eine höhere Ausbeute an Olivenöl zu erzielen.

Das voranstehend beschriebene erfindungsgemäße Verfahren wird in vorteilhafter Weise dadurch weitergebildet, daß der Mischeinrichtung bei der Verarbeitung von eingetrockneten Oliven oder dgl. geringe Mengen Wasser, vorzugsweise weniger als 10 % der Olivenmasse zugeführt werden. Diese Ausgestaltung hat den Vorteil, daß eingetrocknete Oliven oder dgl. verarbeitet werden können, ohne daß durch das erfindungsgemäße Verfahren eine große Menge Abwasser anfällt. Vorzugsweise wird das der Mischeinrichtung zugeführte Wasser der Zentrifuge entnommen.

Es ist nach einem weiteren Merkmal des erfindungsgemäßen Verfahrens vorgesehen, daß das der Zentrifuge zum Waschen und Polieren des in der Bandpresse gewonnenen Öls zwischen 1 und 10 %, vorzugsweise zwischen 3 und 5 % Wasser, bezogen auf die zulaufende Öl-Fruchtwasser-Menge zugesetzt wird.

Ferner hat sich bei dem erfindungsgemäßen Verfahren als vorteilhaft erwiesen, das der Zentrifuge entnommene Wasser dem Umlaufwasser der Reinigungs-Entblätterungseinrichtung und/oder der Mischeinrichtung zuzuführen. Durch diese Ausgestaltung wird ein Kreislauf geschlossen, dessen Voraussetzung es ist, daß das der Zentrifuge entnommene Wasser einen ausreichenden Reinheitsgrad hat, der die Wirkungsweise der Reinigungs-/Entblätterungseinrichtung bzw. der Mischeinrichtung nicht beeinträchtigt.

Der Zentrifuge wird vorzugsweise in Intervallen Schlamm entnommen, dem der Bandpresse entnommener Feststoff zugeführt wird. Dieser Schlamm wird anschließend einer Extraktion zugeführt, bei welcher noch verwertbare Bestandteile extrahiert werden.

Schließlich ist bei dem erfindungsgemäßen Verfahren vorgesehen, daß der Bandpresse kontinuierlich Maische zugeführt wird. Hierdurch wird der Vorteil erzielt, daß ein hoher Ausstoß an Olivenöl möglich ist, der auf der kontinuierlichen Arbeitsweise des Verfahrens basiert.

Weitere Merkmale und Vorteile der Erfindung ergeben sich aus der nachfolgenden Beschreibung der zugehörigen Zeichnung, in der bevorzugte Ausführungsformen der Erfindung bzw. eine Anlage gemäß dem Stand der Technik dargestellt ist. In der Zeichnung zeigen:
- Figur 1: eine erste Ausführungsform einer Anlage zur Herstellung von pflanzlichem Öl aus Oliven oder dgl. ölhaltigen Früchten;
- Figur 2: eine zweite Ausführungsform der Anlage gemäß Figur 1;
- Figur 3: eine dritte Ausführungsform der Anlage gemäß Figur 1 und
- Figur 4: eine aus dem Stand der Technik vorbekannte Anlage zur Herstellung von pflanzlichem Öl aus Oliven oder dgl. ölhaltigen Früchten.

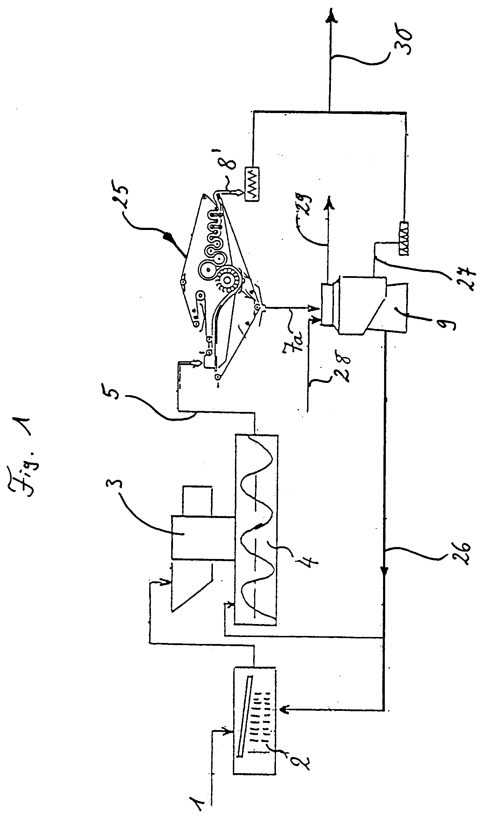

Den in Figuren 1 bis 3 dargestellten Anlagen zur Herstellung von pflanzlichem Öl aus Oliven 1 oder dgl. ölhaltigen Früchten bestehen aus einer Entblätterungs- und Waschanlage 2, welche mit Oliven 1 beaufschlagt wird. Nach dem Entblättern und Waschen in der Entblätterungs- und Waschanlage 2 werden die Oliven 1 einer Mühle 3 zugeführt und ohne Zugabe von Wasser zu Olivenmaische 5 zermahlen, die einem unterhalb der Mühle 3 angeordneten temperierten Mischer 4 übergeben werden. In diesem temperierten Mischer 4 wird die Olivenmaische 5 aufgeschlossen.

Nach einer vorbestimmten Reaktions- bzw. Verweilzeit der Olivenmaische 5 in dem Mischer 4 wird die aufgeschlossene Olivenmaische 5 ohne Wasserzugabe einer Bandpresse 25 zugeführt, in welcher die Olivenmaische 5 in Olivenöl mit Fruchtwasser und Feststoff 8' getrennt. Das Öl-Wasser-Gemisch 7a des Olivenöls wird dann einer Tellerzentrifuge 9 zur Abscheidung von Wasser 26 und Feinstoffteilchen 27 zugeführt. Zur Waschung und Polierung des Olivenöls innerhalb der Tellerzentrifuge 9 wird dieser 3 bis 5 % Wasser 28, bezogen auf die zulaufende Öl-Fruchtwasser-Menge zugesetzt. Über eine Leitung 29 wird aus der Tellerzentrifuge 9 poliertes Olivenöl abgezogen, dessen Gewichtsanteil abhängig ist vom Ölgehalt in den Oliven.

Das der Tellerzentrifuge 9 entnommene Wasser 26 weist einen Reinheitsgrad auf, der es erlaubt, dieses Wasser 26 entweder der Entblätterungs- und Waschanlage 2 oder bei Verarbeitung von Oliven mit geringem Fruchtwasseranteil dem Mischer 4 zuzuführen.

Der in Intervallen aus der Tellerzentrifuge 9 abzuziehende Schlamm besteht aus den Feinstoffteilchen 27 und wird dem aus der Bandpresse 25 abgezogenen Feststoff 8' beigemischt. Ein derart erhaltenes Gemisch 30 kann dann einer Deponierung oder Weiterverwendung zugeführt werden.

Mit der voranstehend beschriebenen Anlage ist es auch möglich, entkernte Oliven 1 zu verarbeiten.

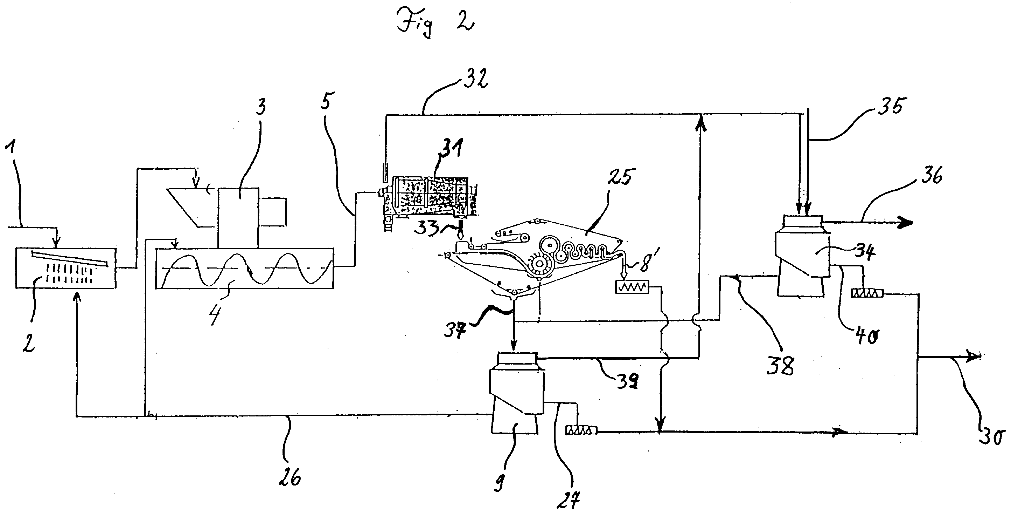

Von der in Figur 1 dargestellten Anlage unterscheidet sich die in Figur 2 dargestellte Anlage in erster Linie durch eine Dekantierzentrifuge 31, die als Vollmantelschneckenzentrifuge ausgebildet und der Bandpresse 25 derart vorgeschaltet ist, daß der Ausgang der Dekantierzentrifuge 31 oberhalb der Aufgabe der Bandpresse 25 angeordnet ist. Eingangsseitig ist die Dekantierzentrifuge 31 an den Ausgang des Mischers 4 unter Zwischenschaltung einer Pumpe angeschlossen.

Bei dieser Anlage gemäß Figur 2 wird die Olivenmaische 5 in der Dekantierzentrifuge 31 entölt, wobei in der Bandpresse 25 eine Teilentölung und Teilentwässerung des der Bandpresse 25 aus der Dekantierzentrifuge 31 aufgegebenen Gutes durchgeführt wird.

In der Dekantierzentrifuge 31 wird die aufgegebenen Olivenmaische 5 in Trüböl 32 und Feststoff 33 mit einem gewissen Anteil an Fruchtwasser getrennt. Das Trüböl 32 wird anschließend einer Tellerzentrifuge 34 in Verbindung mit einer geringen Menge Wasser 35 zugeführt und in der Tellerzentrifuge 34 gereinigt. Aus der Tellerzentrifuge 34 wird dann über eine Leitung 36 Olivenöl abgezogen.

Der aus der Dekantierzentrifuge 31 austretende Feststoff 33 mit einem gewissen Anteil an Fruchtwasser wird der Bandpresse 25 zugeführt und in dieser nachentwässert und nachentölt. Hierbei wird einerseits ein Fruchtwasser-Trübölgemisch 37 und andererseits teilentwässerter Feststoff 8' der Bandpresse 25 entnommen. Das Fruchtwasser-Trübölgemisch 37 wird mit aus der Tellerzentrifuge 34 entnommenem Waschwasser-Fruchtwasser 38 der Tellerzentrifuge 9 zugeführt, aus der nach einem Reinigungs- und Trennungsprozeß abgetrenntes Trüböl 39 dem Trüböl 32 vor Eintritt in die Tellerzentrifuge 34 zugeführt wird. Der ebenfalls aus der Tellerzentrifuge 9 abgezogene Schlamm 27 wird mit dem teilentwässerten Feststoff 8' aus der Bandpresse 25 sowie mit aus der Tellerzentrifuge 34 entnommenem Schlamm 40 vermischt und einer Extraktion zugeführt.

Das der Tellerzentrifuge 9 entnommene Wasser 26 weist einen Reinheitsgrad auf, das es ohne weitere Reinigung entweder der Entblätterungs- und Waschanlage 2 zum Waschen der Oliven oder aber auch dem als Knetwanne ausgebildeten Mischer zugeführt werden kann. Hierzu ist in der Leitung, durch welche das Wasser 26 fließt, ein Handschieber vorgesehen, der eine Steuerung des Wassers 26 in die Entblätterungs- und Waschanlage 2 oder den Mischer 4 ermöglicht. Das Wasser 26 wird dann in den Mischer 4 eingespeist, wenn Oliven 1 mit einem geringen Fruchtwasseranteil verarbeitet werden.

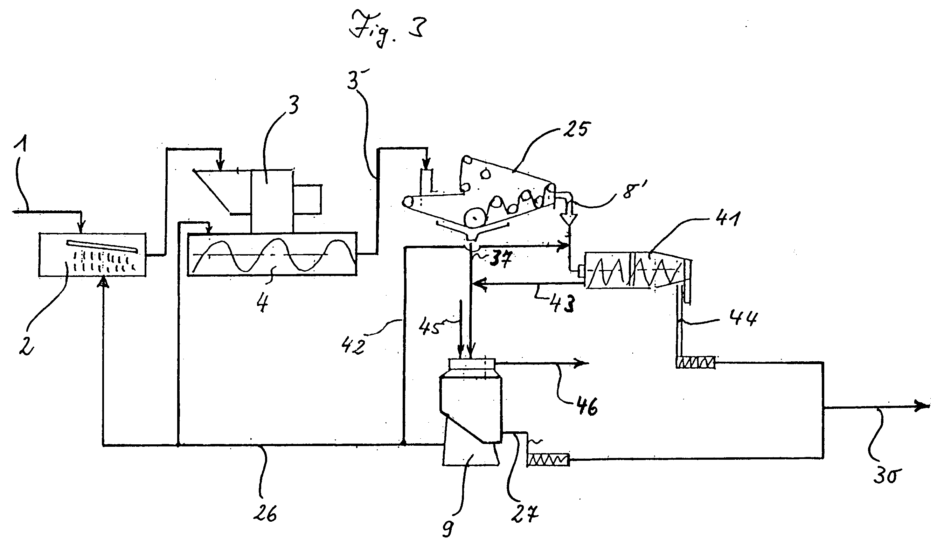

Die in der Figur 3 dargestellte dritte Ausführungsform der Anlage zur Herstellung von pflanzlichem Öl aus Oliven weist eine Dekantierzentrifuge 41 auf, die eingangsseitig mit dem Feststoffaustrag der Bandpresse 25 verbunden ist, so daß der Feststoff 8' von der Bandpresse 25 in die Dekantierzentrifuge 41 eingespeist wird. Zusammen mit dem Feststoff 8' wird der Dekantierzentrifuge 41 gereinigtes Fruchtwasser 42 zugeführt, welches der Tellerzentrifuge 9 entnommen ist.

In der Dekantierzentrifuge 41 wird der der Bandpresse 25 entnommene Feststoff 8' in Restöl 43 und in Feststoff 44 getrennt. Der Feststoff 44 wird zusammen mit den der Tellerzentrifuge 9 entnommenen Feinstoffteilchen 27 zu einem Gemisch 30 zusammengeführt, welches einer Extraktion zuführbar ist.

Das Restöl 43 wiederum wird zusammen mit dem Öl-Fruchtwasser-Gemisch 37, welches der Bandpresse 25 entnommen wird, der Tellerzentrifuge 9 unter Zusatz von geringen Mengen Wasser 45 zugeführt. In der Tellerzentrifuge 9 erfolgt dann eine Reinigungs- und Trennvorgang der zugeführten Stoffe in Olivenöl 46, die Feinstoffteilchen 27 und Wasser 26, welches wiederum entweder der Entblätterungs- und Waschanlage 2 oder dem Mischer 4 zuführbar ist.

Die voranstehend beschriebene Anlage erzielt eine höchstmögliche Ausbeute an Olivenöl 46 sowie eine Qualitätsverbesserung des Olivenöls durch Erhaltung der Polyphenole, die für das Olivenöl 46 von besonderer Bedeutung sind.

## Patentansprüche

1. Anlage zur Herstellung von pflanzlichem Öl aus Oliven oder dgl. ölhaltigen Früchten mit einer Reinigungseinrichtung, einer der Reinigungseinrichtung nachgeschalteten Zerkleinerungseinrichtung, vorzugsweise einer Mühle, einer Mischeinrichtung, die der Zerkleinerungseinrichtung nachgeordnet ist, sowie zumindest einer Einrichtung zum Entölen und/oder Entwässern einer der Mischeinrichtung entnommenen Maische bzw. eines Tresters,
**dadurch gekennzeichnet,**
daß die Einrichtung zum Entölen der der Mischeinrichtung (4) entnommenen Maische (5) bzw. des Tresters als kontinuierlich arbeitende Bandpresse, vorzugsweise als Siebbandpresse (25) ausgebildet ist.

2. Anlage nach Anspruch 1,
**dadurch gekennzeichnet,**
daß der Bandpresse zum Teilentölen und/oder Teilentwässern eine Dekantierzentrifuge (31) zum Entölen und/oder Entwässern der Masche (5) vorgeschaltet ist.

3. Anlage nach Anspruch 2
**dadurch gekennzeichnet,**
daß die Dekantierzentrifuge (31) derart oberhalb der Bandpresse angeordnet ist, daß sich der Ausgang der Dekantierzentrifuge (31) oberhalb der Aufgabe der Bandpresse befindet.

4. Anlage nach Anspruch 1,
**dadurch gekennzeichnet,**
daß der Bandpresse eine Dekantierzentrifuge (41) zum Nachentölen der Maische (5) nachgeschaltet ist.

5. Anlage nach Anspruch 1,
**dadurch gekennzeichnet,**
daß der Dekantierzentrifuge (41) eine Tellerzentrifuge (9) nachgeschaltet ist, die der Reinigung des aus der Dekantierzentrifuge (41) abgezogenen Restöls (43) dient.

6. Verfahren zur Herstellung von pflanzlichem Öl aus Oliven oder dgl. ölhaltigen Früchten, bei dem die Oliven oder dgl. einer Reinigung und/oder Entblätterung zugeführt und anschließend in einer Zerkleinerungseinrichtung, vorzugsweise einer Mühle zur Bereitung einer Maische oder eines Tresters zugeführt werden, woraufhin die Maische oder der Trester in einer Mischeinrichtung, vorzugsweise einem temperierten Mischer aufgeschlossen wird,
**dadurch gekennzeichnet,**
daß die bzw. der aus der Mischeinrichtung (4) abgezogene Maische bzw. Trester (5) einer Bandpresse, vorzugsweise einer Siebbandpresse (25) zur Entölung bzw. Entwässerung zugeführt wird und daß aus der Bandpresse ein Öl-Wasser-Gemisch (7a, 37) und Feststoff (8') abgezogen wird, wobei das Öl-Wasser-Gemisch (7a, 37) mittels einer Zentrifuge, vorzugsweise einer Tellerzentrifuge (9) in seine Bestandteile getrennt wird.

7. Verfahren nach Anspruch 6,
**dadurch gekennzeichnet,**
daß der Mischeinrichtung (4) bei der Verarbeitung von eingetrockneten Oliven (1) oder dgl. geringe Mengen Wasser (26), vorzugsweise weniger als 10 % der Olivenmasse zugeführt werden.

8. Verfahren nach Anspruch 7,
**dadurch gekennzeichnet,**
daß das Wasser (26) der Zentrifuge (9) entnommen wird.

9. Verfahren nach Anspruch 7,
**dadurch gekennzeichnet,**
daß der Zentrifuge (9) zum Wachen und Polieren des in der Bandpresse gewonnenen Öls zwischen 1 und 10 %, vorzugsweise zwischen 3 und 5 % Wasser (28, 45), bezogen auf die zulaufende Öl-Fruchtwasser-Menge (37) zugesetzt wird.

10. Verfahren nach Anspruch 6,
**dadurch gekennzeichnet,**
daß das der Zentrifuge (9) entnommene Wasser (26) dem Umlaufwasser der Reinigungs- und Entblätterungseinrichtung (2) und/oder der Mischeinrichtung (4) zugeführt wird.

11. Verfahren nach Anspruch 6,
**dadurch gekennzeichnet,**
daß der Zentrifuge (9) vorzugsweise in Intervallen entnommener Schlamm (27) dem der Bandpresse entnommenen Feststoff (8') zugeführt wird.

12. Verfahren nach Anspruch 6,
**dadurch gekennzeichnet,**
daß die bzw. der Mischeinrichtung (4) abgezogene Maische bzw. Trester (5) vor Zuführung der Bandpresse einer Dekantierzentrifuge (31) zur Entölung zugeführt wird, woraufhin der der Dekantierzentrifuge (31) entnommene Feststoff (33) der Bandpresse zur Teilentölung und/oder Teilentwässerung zugeführt wird.

13. Verfahren nach Anspruch 6,
**dadurch gekennzeichnet,**
daß der Bandpresse Feststoff (8') entnommen wird, welcher einer Dekantierzentrifuge (41) zum Nachentölen zugeführt wird.

14. Verfahren nach Anspruch 13,
**dadurch gekennzeichnet,**
daß der Dekantierzentrifuge (41) entnommener Feststoff (44) mit aus der Zentrifuge (9) entnommenen Feststoff (27) vermischt und einer Extraktion zugeführt wird.

15. Verfahren nach Anspruch 6,
**dadurch gekennzeichnet,**
daß der Bandpresse (25) kontinuierlich Maische (5) zugeführt wird.
